# EUROPÄISCHE PATENTSCHRIFT

(11) **EP 1 695 844 B1**
(45) Veröffentlichungstag und Bekanntmachung des Hinweises auf die Patenterteilung: **20.04.2011**
(21) Anmeldenummer: 05101443.9
(22) Anmeldetag: 25.02.2005
(51) Int. Cl.: B60C 11/13, B60C 11/11

(54) **Fahrzeugreifen mit einem Laufstreifenprofil**
Vehicle tyre with tread profile
Pneumatique pour véhicule muni d'un profil de bande de roulement

(43) Veröffentlichungstag der Anmeldung: 30.08.2006
(73) Patentinhaber: Continental Reifen Deutschland GmbH, 30165 Hannover (DE)
(72) Erfinder: Kaiser, Hinnerk, 30659, Hannover (DE)
(74) Vertreter: Finger, Karsten

(56) Entgegenhaltungen:
- EP-A- 0 997 323
- EP-A- 1 106 393
- EP-A- 1 120 295
- WO-A-02/078982
- US-A- 5 746 849
- PATENT ABSTRACTS OF JAPAN Bd. 2002, Nr. 03, 3. April 2002 (2002-04-03) & JP 2001 322407 A (BRIDGESTONE CORP), 20. November 2001 (2001-11-20)

## Beschreibung

Die Erfindung betrifft einen Fahrzeugreifen mit einem - insbesondere drehrichtungsgebundenen - Laufstreifenprofil mit wenigstens zwei in Umfangsrichtung des Fahrzeugreifens erstreckten Schulterprofilblockreihen mit in Umfangrichtung hintereinander und jeweils durch eine Querrille voneinander getrennt angeordneten Profilblockelementen und mit weiteren axial zwischen den Schulterprofilblockreihen angeordneten Profilblockreihen mit in Umfangrichtung hintereinander und jeweils durch eine Querrille voneinander getrennt angeordneten Profilblockelementen, wobei diese weiteren Profilblockreihen jeweils zu beiden axialen Seiten von einer Umfangsrille begrenzt werden, wobei die die Profilblockelemente wenigstens einer der weiteren Profilblockreihen trennenden Querrillen in von der nächstliegenden Reifenschulter wegweisender axialer Richtung mit einem - insbesondere zunehmenden - Steigungswinkel (α) zur Axialen ausgebildet sind.

Bei derartigen Profilen geht üblicherweise eine Verbesserung von Trockenhandlingeigenschaft mit einer Verschlechterung der Aquaplaningeigenschaften und umgekehrt eine Verbesserung der Aquaplaningeigenschaften mit einer Verschlechterung der Trockenhandlingeigenschaften einher. Ebenso geht eine Verbesserung des Wintergriffs mit einer Verschlechterung der Trockenbremseigenschaften und umgekehrt eine Verbesserung von Trockenbremseigenschaften mit einer Verschlechterung der Wintergriffs einher. Bei der Konstruktion derartiger Profile wird daher jeweils die Verbesserung einer dieser Eigenschaften durch Inkaufnahme der Verschlechterung der anderen Eigenschaften erzielt.

Der Erfindung liegt die Aufgabe zugrunde bei einem Fahrzeugreifen mit einem - insbesondere drehrichtungsgebundenen - Laufstreifenprofil mit wenigstens zwei in Umfangsrichtung des Fahrzeugreifens erstreckten Schulterprofilblockreihen mit in Umfangrichtung hintereinander und jeweils durch eine Querrille voneinander getrennt angeordneten Profilblockelementen und mit weiteren axial zwischen den Schulterprofilblockreihen angeordneten Profilblockreihen mit in Umfangrichtung hintereinander und jeweils durch eine Querrille voneinander getrennt angeordneten Profilblockelementen, wobei diese weiteren Profilblockreihen jeweils zu beiden axialen Seiten von einer Umfangsrille begrenzt werden, wobei die die Profilblockelemente wenigstens einer der weiteren Profilblockreihen trennenden Querrillen in von der nächstliegenden Reifenschulter wegweisender axialer Richtung mit einem zunehmenden Steigungswinkel (α) zur Axialen ausgebildet sind, gute Aquaplaningeigenschaften mit guter Trockenhandling-, guter Wintergriff- und gutem Trockenbremseigenschaft zu verbinden. Das Dokument EP-A-0 997 323 offenbart einen Fahrzeugreifen gemäß dem Oberbegriff des Anspruchs 1.

Erfindungsgemäß wird die Aufgabe durch die Ausbildung eines Fahrzeugreifens mit einem - insbesondere drehrichtungsgebundenen - Laufstreifenprofil mit wenigstens zwei in Umfangsrichtung des Fahrzeugreifens erstreckten Schulterprofilblockreihen mit in Umfangrichtung hintereinander und jeweils durch eine Querrille voneinander getrennt angeordneten Profilblockelementen und mit weiteren axial zwischen den Schulterprofilblockreihen angeordneten Profilblockreihen mit in Umfangrichtung hintereinander und jeweils durch eine Querrille voneinander getrennt angeordneten Profilblockelementen, wobei diese weiteren Profilblockreihen jeweils zu beiden axialen Seiten von einer Umfangsrille begrenzt werden, wobei die die Profilblockelemente wenigstens einer der weiteren Profilblockreihen trennenden Querrillen in von der nächstliegenden Reifenschulter wegweisender axialer Richtung mit einem zunehmenden Steigungswinkel (α) zur Axialen ausgebildet sind, gemäß den Merkmalen von Anspruch 1 gelöst, wobei die Profilblockelemente dieser Profilblockreihe in axialer Richtung zur Reifenschulter hin jeweils mit einer rampenartigen länglichen Vertiefung ausgebildet sind, die sich axial bis in die die Profilblockreihe zur nächstliegenden Schulter hin begrenzenden Umfangsrille mit zunehmender Tiefe erstreckt und in diese Umfangsrille mündet, wobei die rampenartigen länglichen Vertiefungen in ihrer Längserstreckung in von der nächstliegenden Reifenschulter wegweisender axialer Richtung mit einem zunehmenden Steigungswinkel (β) zur Axialen ausgebildet sind. Die mit der rampenartigen Vertiefung ausgebildeten Profilblockelemente ermöglichen eine in Umfangsrichtung und Querrichtung lang ausgebildete Blockstruktur mit hoher Umfangssteifigkeit und hoher Quersteifigkeit, wodurch Trockenbremseigenschaften und Trockenhandling begünstigt werden, mit vielen Querkanten, wodurch die Wintergriffeigenschaften begünstigt werden, und mit Wasserabführkanälen, wodurch die Aquaplaningeigenschaften begünstigt werden. Darüber hinaus ermöglicht diese Ausbildung bei gleichzeitiger hoher Unfangssteifigkeit und Quersteifigkeit auch die Ausbildung mit extremer Profilpfeilung, wodurch die Aquaplaningeigenschaft weiter verbessert werden kann.

Besonders vorteilhaft ist die Ausbildung gemäß den Merkmalen von Anspruch 2, wobei die die Profilblockelemente der beiden mittleren Profilblockreihen trennenden Querrillen jeweils in von der nächstliegenden Reifenschulter wegweisender axialer Richtung mit einem zunehmenden Steigungswinkel (α) zur Axialen ausgebildet sind, wobei die Profilblockelemente dieser Profilblockreihen in axialer Richtung zur Reifenschulter hin jeweils mit einer rampenartigen länglichen Vertiefung ausgebildet sind, die sich axial bis in die die Profilblockreihe zur nächstliegenden Schulter hin begrenzenden Umfangsrille mit zunehmender Tiefe erstreckt und in diese Umfangsrille mündet, wobei die rampenartigen länglichen Vertiefungen in ihrer Längserstreckung in von der nächstliegenden Reifenschulter wegweisender axialer Richtung mit einem zunehmenden Steigungswinkel (β) zur Axialen ausgebildet sind. Hierdurch kann in einfacher Weise eine zusätzliche Erhöhung der Längssteifigkeit der Profilblockelemente der mittleren Profilblockreihe ermöglicht werden.

Besonders vorteilhaft ist die Ausbildung gemäß den Merkmalen von Anspruch 3, wobei die rampenartige Vertiefung das jeweilige Profilblockelement der Profilblockreihe auf der zur Reifenschulter hinweisenden axialen Seite in zwei in Umfangsrichtung hintereinander angeordnete zur nächstliegenden Reifenschulter hin benachbarten Profilblockreihe - insbesondere Schulterprofilblockreihe - weisende Profilblockschenkel auftrennt, wobei jeweils ein einem Schenkel zugeordnetes Profilblockelement der benachbarten Profilblockreihe -insbesondere einer Schulterprofilblockreihe - die axiale Verlängerung des Schenkels in der benachbarten Profilblockreihe bildet. Dies erleichtert die Querentwässerung.

Besonders vorteilhaft ist die Ausbildung gemäß den Merkmalen von Anspruch 4, mit einem V-förmigen Profilbild. Dies dient einer Verbesserung der Traktions- und Aquaplaningeigenschaften.

Besonders vorteilhaft ist die Ausbildung gemäß den Merkmalen von Anspruch 5, mit einer zentraler Umfangsrille.

Besonders vorteilhaft ist die Ausbildung gemäß den Merkmalen von Anspruch 6, mit einem Querrillenverlauf mit von den Reifenschultern zur zentraler Umfangsrille hin zunehmender Steigung zur axialen Richtung.

Besonders vorteilhaft ist die Ausbildung gemäß den Merkmalen von Anspruch 7, wobei sich die Profilblockelemente beider mittleren Profilblockreihen jeweils axial ausgehend von der zur nächstliegenden Reifenschulter weisenden Seite zur axialen Reifenmitte hin über die Äquatorebene hinaus in Umfangsrichtung zueinander versetzt erstrecken und - insbesondere eine Zickzackform der zentralen Umfangsrille bewirken. Dies dient einer Verbesserung der Entwässerung und der Schneetraktion.

Besonders vorteilhaft ist die Ausbildung gemäß den Merkmalen von Anspruch 8, bei der die die Profilblockelemente der mittleren Profilblockreihen in Umfangsrichtung von einander trennenden Querrillen jeweils in den zur nächstliegenden Reifenschultern augeordneten Profilblockreihen über die gesamte axiale Erstreckung des Profils im Aufstandsbereich verlängert sind und über ihre gesamte axiale Erstreckung von axial außen nach innen hin mit einem zunehmenden Steigungsverlauf (α) zur axialen ausgebildet sind, wobei jeweils eine von der einen Reifenschulter zur axialen Mitte hin erstreckte Querrille mit ihrem axial von der Schulter wegweisenden Ende in eine von der anderen Reifenschulter zur axialen Mitte hin erstreckte Querrille unter einem Winkel (γ) Querrille mündet, wobei 20°≤γ≤70° Hierdurch wird die Entwässerung und die Schneetraktion begünstigt.

Besonders vorteilhaft ist die Ausbildung gemäß den Merkmalen von Anspruch 9, wobei sich die rampenartige, längliche Vertiefung von der zur nächstliegenden Reifenschulter weisenden Seite des Profilblockelements nach axial innen in einem ersten axialen Erstreckungsbereich mit einem Steigungswinkel β der Längserstreckung zur Axialen mit 25°≤β≤35°, in einem axial nach innen anschließenden zweiten axialen Erstreckungsbereich mit einem Steigungswinkel β der Längserstreckung zur Axialen mit 40°≤β≤50° und in einem axial nach innen anschließenden dritten axialen Erstreckungsbereich mit einem Steigungswinkel β der Längserstreckung zur Axialen mit 80°≤β≤90° erstreckt. Hierdurch wird die Entwässerung und die Schneetraktion begünstigt.

Besonders vorteilhaft ist die Ausbildung gemäß den Merkmalen von Anspruch 10, mit einem axialen Abstand x, der den axialen Abstand zwischen der über den Umfang des Reifens gemittelten Umfangsrillenmitte der die mittlere Profilblockreihe zur nächstliegenden Schulter hin begrenzenden Umfangsrille und dem axial nach innen gerichteten Rampe eines Profilblockelementes dieser Profilblockreihe darstellt, mit einem axialen Abstand y, der den axialen Abstand zwischen der über den Umfang des Reifens gemittelten Umfangsrillenmitte der die mittlere Profilblockreihe zur nächstliegenden Schulter hin begrenzenden Umfangsrille und der Äquatorebene darstellt, wobei für das Verhältnis der Abstände x zu y gilt: 0,6≤(x/y) ≤0,8. Hierdurch wird die Entwässerung und die Schneetraktion begünstigt.

Besonders vorteilhaft ist die Ausbildung gemäß den Merkmalen von Anspruch 11, wobei die rampenartige länglichen Vertiefung über ihre axiale Erstreckung bis in die die Profilblockreihe zur nächstliegenden Schulter hin begrenzenden Umfangsrille hin mit kontinuierlich zunehmender Tiefe ausgebildet ist, wobei sie in der die Umfangsrille begrenzenden Flanke des Profilblocks ihre größte Tiefe D und an ihrem anderen axialen Ende ihre geringste Tiefe C aufweist, wobei das Verhältnis zwischen kleinster Tiefe C und größter Tiefe D im Neuzustand des Fahrzeugreifens gilt: 0,2≤(C/D) ≤0,7. Hierdurch wird bei sicherer Anbindung hohes Negativvolumen ermöglicht.

Besonders vorteilhaft ist die Ausbildung gemäß den Merkmalen von Anspruch 12, wobei die die Profilblockreihe zur Reifenschulter hin - insbesondere zur Schulterblockreihe hin - begrenzende Umfangsrille aus einem radial inneren Bereich und einem radial äußeren Bereich ausgebildet ist.

Besonders vorteilhaft ist die Ausbildung gemäß den Merkmalen von Anspruch 13, wobei die Profilblockelement mit Feineinschnitten ausgebildet sind.

Besonders vorteilhaft ist die Ausbildung gemäß den Merkmalen von Anspruch 14, mit einer über den Umfang des Fahrzeugreifens erstreckten, in Umfangsrichtung ausgerichteteten Umfangsrille, die zwei axial benachbarte über den Umfang des Fahrzeugreifens erstreckt ausgebildete Profilblockreihen mit jeweils über den Umfang des Fahrzeugreifens verteilt und jeweils durch in die Umfangsrille einmündende Querrillen oder rampenförmige Vertiefungen voneinander getrennt ausgebildeten Profilblockabschnitte von einander trennt, wobei jedem Profilblockabschnitt der einen Profilblockreihe ein Profilblockabschnitt der anderen Profilblockreihe zugeordnet ausgebildet ist, wobei die die Umfangsrille begrenzenden Flanken der einander zugeordneten Profilblockabschnitte - insbesondere parallel zueinander -unter Einschluss einer axialen Richtungskomponente schräg unter einem Winkel δ zur Umfangsrichtung verlaufen, wobei sich die Flanken von radial innen aus dem Rillengrund nach radial außen bis zur radial nach außen weisenden Oberfläche des Profilblockabschnitts erstrecken, wobei im Übergang zwischen radial äußerer Oberfläche des Profilblockabschnitts und der Flanke eine um die Längserstreckungsrichtung der Flanke geneigte Fläche ausgebildet ist, die eine vom einen in Längserstreckungsrichtung der Flanke ausgebildeten Erstreckungsende zum anderen in Längserstreckungsrichtung der Flanke ausgebildeten Erstreckungsende zunehmenden Querschnitt aufweist, wobei die Schnittkante zwischen geneigter Fläche und radial äußerer Oberfläche des Profilblockabschnitts einen kleineren Winkel θ zur Umfangsrichtung einschließt als den Winkel δ. Hierdurch wird ein axialer Versatz innerhalb der Umfangsrille mit vielen Griffkanten in der Profilrille zur Erhöhung der Reibung zwischen dem in der Profilrille befindlichen Schnee und dem auf der Straßenoberflächen befindlichen Schnee und somit zur Begünstigung der Wintereigenschaften mit guter Ablaufmöglichkeit für das Wasser im Übergangsbereich zwischen Flanken und radial äußerer Oberfläche der Profilblockelemente und somit begünstigter Aquaplaningeigenschaften ermöglicht

Besonders vorteilhaft ist die Ausbildung gemäß den Merkmalen von Anspruch 15, wobei die Richtung der Zunahme des Querschnitts der beiden einander zugeordneten Profilblockelemente der beiden Profilblockreihen entgegengerichtet zueinander ist.

Besonders vorteilhaft ist die Ausbildung gemäß den Merkmalen von Anspruch 16, wobei jedem Profilblockabschnitt der einen Profilblockreihe ein Profilblockabschnitt der anderen Profilblockreihe zugeordnet ausgebildet ist, wobei die die Umfangsrille begrenzenden Flanken der einander zugeordneten Profilblockabschnitte - insbesondere parallel zueinander - ausgehend von axial außen nach axial innen unter Einschluss einer axialen Richtungskomponente mit gleicher Orientierung schräg zur Umfangsrichtung verlaufen.

Besonders vorteilhaft ist die Ausbildung gemäß den Merkmalen von Anspruch 17, wobei jedem Profilblockabschnitt der einen Profilblockreihe ein Profilblockabschnitt der anderen Profilblockreihe zugeordnet ausgebildet ist, wobei die die Umfangsrille begrenzenden Flanken all dieser jeweils einander zugeordneten Profilblockabschnitte - insbesondere parallel zueinander - ausgehend von axial außen nach axial innen unter Einschluss einer axialen Richtungskomponente mit gleicher Orientierung schräg zur Umfangsrichtung verlaufen.

Besonders vorteilhaft ist die Ausbildung gemäß den Merkmalen von Anspruch 18, wobei die im Übergang zwischen radial äußerer Oberfläche des Profilblockabschnitts und der Flanke zur Längserstreckungsrichtung der Flanke geneigte Fläche eine trapezförmige Fläche ist.

Besonders vorteilhaft ist die Ausbildung gemäß den Merkmalen von Anspruch 19, wobei die im Übergang zwischen radial äußerer Oberfläche des Profilblockabschnitts und der Flanke zur Längserstreckungsrichtung der Flanke geneigte Fläche eine dreieckige Fläche ist.

Die Erfindung wird im Folgenden an Hand der in den Fig. 1 bis 3 dargestellten Ausführungseispiele eines PKW-Fahrzeugluftreifens radialer Bauart mit Winterlaufflächenprofil dargestellt. Darin zeigen
Fig. 1 Draufsicht auf ein erfindungsgemäßes Laufflächenprofil,
Fig. 2 Schnittdarstellung gemäß Schnitt II-II von Fig. 1
Fig. 3 Schnittdarstellung gemäß Schnitt III-III von Fig. 1.

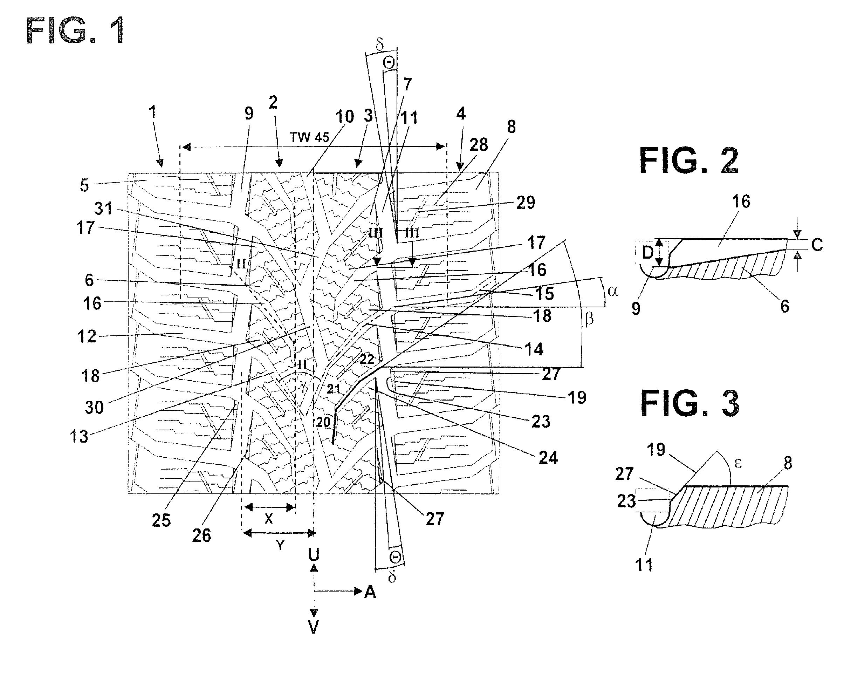

Die Figuren 1 bis 3 zeigen ein Winterreifenprofil eines Fahrzeugluftreifens radialer Bauart für Personenkraftwagen mit drehrichtungsgebundenen Laufflächenprofil. In der Fig. 1 ist die bei einem an einem Fahrzeug montierten Fahrzeugluftreifen in dessen Betriebszustand für die Vorwärtsfahrt des Fahrzeugluftreifens konzipierte in Umfangsrichtung geriichtete Drehrichtung mit Pfeildarstellung V entgegen der in Pfeildarstellung eingetragenen Umfangsrichtung U orintiert angegeben, die axiale Richtung A des Fahrzeugluftreifens ist mit ebenfalls mit Pfeildarstellung angegeben. Das Laufflächenprofil ist in bekannter Weise mit jeweils einer im axialen Laufflächenbereich der beiden Reifenschultern ausgebildeten Schulterprofilblockreihe 1 und 4 ausgebildet, die sich jeweils über den gesamten Umfang des Fahrzeugluftreifens erstrecken und aus über den Umfang des Fahrzeugluftreifens in Umfangsrichtung verteilten, hintereinander angeordneten Profilblockelementen 5 bzw. 8 ausgebildet ist, und mit zwei axial benachbarten zentralen axial zwischen den beiden Schulterprofilblockreihen 1 und 4 angeordneten Profilblockreihen 2 und 3 ausgebildet, die sich jeweils über den gesamten Umfang des Fahrzeugluftreifens erstrecken und die jeweils aus über den Umfang des Fahrzeugluftreifens in Umfangsrichtung verteilten, hintereinander angeordneten Profilblockelementen 6 bzw. 7 ausgebildet ist. Die in Umfangsrichtung hintereinander angeordneten Profilblockelemente 5 der Schulterprofilblockreihe 1 sind jeweils durch eine Querrille 12, die sich über die gesamte axiale Erstreckung der Schulterprofilblockreihe 1 erstreckt, voneinander getrennt. Ebenso sind die in Umfangsrichtung verteilten, hintereinander angeordneten Profilblockelemente 8 der rechten Schulterpfofilblockreihe 4 jeweils voneinander durch in axiale Richtung über die gesamte Schulterprofilblockreihe 4 erstreckte Querrillen 15 voneinander getrennt. Die in Umfangsrichtung hintereinander angeordneten Profilblockelemente 6 der zentralen Profilblockreihe 2 sind jeweils in Umfangsrichtung voneinander durch über die gesamte axiale Erstreckung der Profilblockreihe 2 axial erstreckte Querrillen 13 voneinander getrennt. Die über den Umfang hintereinander verteilt angeordneten Profilblockelemente 7 der Profilblockreihe 3 sind in Umfangsrichtung jeweils von über die gesamte axiale Erstreckung der Profilblockreihe 3 axial erstreckte Querrillen 14 voneinander getrennt.

Die Schulterprofilblockreihe 1 ist von der benachbarten zentralen Profilblockreihe 2 durch eine über den Umfang des Fahrzeugluftreifens erstreckte Umfangsrille 9 in axialer Richtung getrennt. Die beiden zentralen Profilblockreihen 2 und 3 sind in axialer Richtung durch eine über den Umfang des Fahrzeugluftreifen erstreckte Umfangsrille 10 voneinander getrennt. Die zentrale Profilblockreihe 3 ist von der benachbarten Schulterblockreihe 4 in axialer Richtung durch eine über den Umfang des Fahrzeugluftreifens erstreckte Umfangsrille 11 getrennt.

Die axiale Verlängerung des Verlaufs der Querrillen 13 der zentralen Profilblockreihe 2 über die Umfangsrille 9 hinweg zur benachbarten Schulterblockreihe 1 führt jeweils direkt in eine Querrille 12 der Schulterprofilblockreihe 1 über. Die axiale Verlängerung des Verlaufs der Querrillen 14 der zentralen Profilblockreihe 3 über die Umfangsrille 11 hinweg zur benachbarten Schulterprofilblockreihe 4 führt jeweils direkt in eine Querrille 15 der Schulterprofilblockreihe 4 über.
Die Querrillen 13 der zentralen Profilblockreihe 2 gehen in der axialen Verlängerung ihres Verlaufs in Richtung benachbarter zentraler Profilblockreihe 3 direkt in die Umfangsrille 10 über und stoßen mit ihrem in der Verlängerung gebildeten Übergangsbereich 30 unter einem Winkel γ auf eine Querrille 14 der Profilblockreihe 3. Die Querrillen 14 der Profilblockreihe 3 gehen in der axialen Verlängerung ihres Verlaufs in Richtung benachbarter zentraler zur Profilblockreihe 2 direkt in die zentrale Umfangsrille 10 über und stoßen mit ihrem in der Verlängerung gebildeten Übergangsbereich 31 unter einem Winkel γ auf eine Querrille 13 der Profilblockreihe 2. Die Umfangsrille 10 ist auf diese Weise aus über den Umfang verteilt jeweils alternierend unmittelbar aneinander gereihten hintereinander angeordneten derartigen Übergangsbereichen 30 der Querrillen 13 der zentralen Profilblockreihe 2 und Übergangsbereichen 31 der Querrillen 14 der zentralen Profilblockreihe 3 ausgebildet.

Innerhalb der Reifenaufstandsbreite TW₄₅ bilden die Querrillen 14 der Profilblockreihe 3 mit den im Schulterbereich verlängerten Querrillen 15 eine in axialer Richtung von der Reifenschulter ausgehend bis zur Querrille 12 der Profilblockreihe 2 erstreckte unter einem Steigungswinkel α zur axialen Richtung verlaufenden Gesamtrillenverlauf, wobei der Steigungswinkel α ausgehend von der Reifenschulter bis zur Querrille 12 hin zunehmend ausgebildet ist. Innerhalb der Aufstandsbreite TW₄₅ ist die Steigung der Querrille 15 im Bereich der Schulterprofilblockreihe 4 beispielsweise mit konstantem Steigungswinkel α - mit beispielsweise 5° ≤ α ≤ 15°, beispielsweise α =10° - zur Umfangsrichtung hin ausgebildet. Im Übergang zur Querrille 14 der Profilblockreihe 3 ist beispielsweise eine erste Abknickung des Verlaufs mit geringfügige Zunahme des Steigungswinkels α, - mit beispielsweise 25° ≤ α ≤ 35°, beispielsweise α = 30° - im weisteren axialen Anfangsbereich der Profilblockreihe 3 - nach beispielsweise 5 bis 10% der maximalen axialen Erstreckung Profilblockreihe 3 - ist eine zweite Abknickung des Verlaufes mit Zunahme des Steigungswinkels α - mit beispielsweise 40° ≤ α ≤ 50°, beispielsweise α =45° - und im Übergang zum Übergangsbereich 30 in der Umfangsrille 10 eine weitere Abknickung des Steigungswinkels α - mit beispielsweise 60° ≤ α ≤ 70°, beispielsweise α = 65° - ausgebildet.

In analoger Weise bilden die Querrillen 13 der Profilblockreihe 2 innerhalb der Reifenaufstandsbreite TW₄₅ mit den im Schulterbereich verlängerten Querrillen 12 eine in axialer Richtung von der Reifenschulter ausgehend bis zur Querrille 13 der Profilblockreihe 3 erstreckte unter einem Steigungswinkel α zur axialen Richtung verlaufenden Gesamtrillenverlauf, wobei der Steigungswinkel α ausgehend von der Reifenschulter bis zur Querrille 13 hin zunehmend ausgebildet ist. Innerhalb der Aufstandsbreite TW₄₅ ist die Steigung der Querrille 12 im Bereich der Schulterprofilblockreihe 1 beispielsweise mit konstantem Steigungswinkel α - mit beispielsweise 5° ≤ α ≤ 15°, beispielsweise α = 10° - zur Umfangsrichtung hin ausgebildet. Im Übergang zur Querrille 13 der Profilblockreihe 2 ist beispielsweise eine erste Abknickung des Verlaufs mit geringfügige Zunahme des Steigungswinkels α- mit beispielsweise 25° ≤ α ≤ 35°, beispielsweise α = 30° -, im weisteren axialen Anfangsbereich der Profilblockreihe 2 - nach beispielsweise 5 bis 10% der maximalen axialen Erstreckung Profilblockreihe 2 - ist eine zweite Abknickung des Verlaufes mit Zunahme des Steigungswinkels α - mit beispielsweise beispielsweise 40° ≤ α ≤ 50°, beispielsweise α =45° - und im Übergang zum Übergangsbereich 31 in der Umfangsrille 10 eine weitere Abknickung des Steigungswinkels α - mit beispielsweise 60° ≤ α ≤ 70°, beispielsweise α = 65° - ausgebildet.

Die Querrillen 12, 13, 14 und 15 bilden auf diese Weise einen V-förmigen Querrillenverlauf.

Die Profilblockelemente 7 der Profilblockreihe 3 sind jeweils mit einer in Umfangsrichtung des Fahrzeugluftreifens beispielsweise mittig zwischen den das Profilblockelement 7 begrenzenden Querrillen 14 von der Umfangsrille 11 ausgehenden in Richtung Umfangsrille 10 hin axial erstreckten rampenförmigen, länglichen Vertiefung 16 ausgebildet, die sich in axialer Richtung von der über den Umfang des Fahrzeugreifens gemittelten axialen Mitte der Umfangsrille 11 ausgehend über einen axialen Abstand X zur Umfangsrille 10 hin erstreckt. Die gemittelte axiale Mitte der Umfangsrille 11 ist im axialen Abstand Y von der Äquartorebene ausgebildet. Für das Verhältnis X/Y gilt dabei: 0,6 ≤ (X/Y) ≤ 0,8.

Die rampenartige Vertiefung teilt das Profilblockelement in zwei in Umfangsrichtung des Fahrzeugluftreifens hintereinander angeordnete Profilblockschenkel 17 und 18, die zwischen Umfangsrille 11 und dem axial zur Umfangsrille 10 hin gerichteten Ende der rampenartigen Vertiefung 16 ineinander übergehen. Die rampenartige Vertiefung 16 ist von ihrem axial inneren zur Umfangsrille 10 hinweisenden Erstreckungsende ausgehend bis zur Umfangsrille 11, in die sie mündet, mit einem zunehmenden Steigungswinkel β zur Axialen hin ausgebildet., wobei in einem ersten axialen Erstreckungsbereich 20 von der Umfangsrille 11 ausgehend der Steigungswinkel β mit 25° ≤ β ≤ 35°, im axialen Anschluss an eine Knickstelle in einem zweiten axialen Erstreckungsbereich 21 mit einem Steigungswinkel β mit 40° ≤ β ≤ 50° und im Anschluss an eine weitere Knickstelle ausgebildeten dritten axialen Erstreckungsbereich 23 mit einem Steigungswinkel β mit 80° ≤ β ≤ 90° zur Axialen hin ausgebildet ist.

Die rampenartige Vertiefung 16 geht in axialer Verlängrung über die Umfangsrille 11 hinweg zur nächstliegenden Schulter in eine Querrille 15 der Schulterprofilblockreihe 4 über.

Die rampenförmige Vertiefung 16 ist - wie in Fig. 2 dargestellt ist - mit einer ausgehend von ihrem axial zur Umfangsrille 10 hin gerichteten Erstreckungsende bis zur Umfangsrille 11 hin kontinuierlich zunehmender Tiefe ausgebildet. Die Tiefe ist dabei jeder axialen Position der rampenartigen Vertiefung 16 der maximale radiale Abstand der radialen äußeren Oberfläche des Profilblockelementes 7 zum Rampengrund. Dabei ist die kleinste Tiefe der rampenartigen Vertiefung 16 die am axial zur Profilrille 10 hin inneren Ende der rampenartigen Vertiefung 16 gemessene Tiefe C und die größte Tiefe die im Übergang der rampenartigen Vertiefung 16 in die Umfangsrille 11 in der Rillenseitenwand gemessene Tiefe D, wobei für das Verhältnis C/D gilt: 0,2 ≤ (C/D) ≤ 0,7.

In analoger Weise wie die Profilblockelemente 5 sind die Profilblockelemente 6 mit rampenförmigen Vertiefungen 16 ausgebildet, die ausgehend von der Umfangsrille 9 jeweils ebenfalls die Profilblockelemente 6 in Umfangsrichtung hintereinander angeordneten Profilblockschenkel 17 und 18 teilt. Die rampenförmige Vertiefung 16 der Profilblockelemente 6 geht jeweils in ihrer axialen Verlängerung über die Umfangsrille 9 hinweg direkt in eine Querrille 12 der Profilblockreihe 1 über.

In der dargestellten Ausführung ist in Umfangsrichtung U des Fahrzeugluftreifens geht jeweils in alternierendem Wechsel eine Querrille 15 der Schulterprofilblockreihe 4 in eine Querrille 14 der Profilblockreihe 3, die in Umfangsrichtung nachfolgende Querrille 15 der Schulterprofilblockreihe 4 in eine rampenförmige Vertiefung 16 der Profilblockreihe 3 und wiederum die in Umfangsrichtung nachfolgende Querrille 15 der Schulterprofilblockreihe 4in eine Querrille 14 der Profilblockreihe 3 über. In analoger alternierender Weise geht in Umfangsrichtung U des Fahrzeugluftreifens jeweils in alternierendem Wechsel eine Querrille 12 der Schulterprofilblockreihe 1 in eine Querrille 13 der Profilblockreihe 2, die in Umfangsrichtung nachfolgende Querrille 12 der Schulterprofilblockreihe 1 in eine rampenförmige Vertiefung 16 der Profilblockreihe 1 und wiederum die in Umfangsrichtung nachfolgende Querrille 12 der Schulterprofilblockreihe 4in eine Querrille 13 der Profilblockreihe 2 über.

Auf diese Weise ist jeweils ein Profilblockschenkel 18 eines Profilblockelementes 7 der Profilblockreihe 3 genau einem axial benachbarten Profilblock 8 der Schulterblockreihe 4, jeweils ein Profilblockschenkel 17 eines Profilblockelementes 7 der Profilblockreihe 3 ebenfalls genau einem axial benachbarten Profilblock 8 der Schulterprofilblockreihe 4, jeweils ein Profilblockschenkel 17 eines Profilblockelementes 6 der Profilblockreihe 2 genau einem Profilblockelement 5 der Schulterprofilblockreihe 1 und jeweils ein Profilblockschenkel 18 eines Profilblockelementes 6 der Profilblockreihe 2 genau einem Profilblockelement 5 der Schulterprofilblockreihe 1 zugeordnet.

Die axial nach innen zur Umfangsrille 11 gerichteten Profilblockflanken 23 der Profilblöcke 8 der Profilblockreihe 4 bilden die eine Rillenwand der Umfangsrille 11, die axial nach außen zur Umfangsrille 11 hin gerichteten Flanken 24 der Profilblockschenkel 15 und 17 der Profilblockelemente 7 der Profilblockreihe 3 bilden die zweite Rillenwand der Umfangsrille 11. Ebenso bilden die axial nach innen zur Umfangsrille 9 hin gerichteten Flanken 25 der Profilblockelemente 5 die eine Rillenwand der Umfangsrille 9 und die axial nach außen zur Umfangsrille 9 hin gerichteten Flanken 26 der Profilblockschenkel 17 und 18 der Profilblockelemente 6 der Profilblockreihe 2 die zweite Rillenwand der Umfangsrille 9.

Der weitere Rillenaufbau ist im Folgenden lediglich anhand der Umfangsrille 11 beschrieben, ist jedoch für Umfangsrille 9 in analog Weise ausgebildet.

Wie in Fig. 1 zu erkennen ist, sind die Flanken 23 und 24 ebenso wie auch der Verlauf des Rillengrund der Umfangsrille 11 zwischen den Flanken 23 und 24 in Drehrichtung V bei Vorwärtsfahrt gesehen unter einem Winkel δ zur Umfangsrichtung geneigt verlaufend ausgebildet, so dass die Erstreckungsrichtung der Rille im Rillengrund und in den Flanken 23 und 22 über die radiale Erstreckung der Rille vom Rillenrgrund nach außen hinweg in den radialen Schnittebenen jeweils unter einem in Drehrichtung V des Fahrzeugluftreifens bei Vorwärtsfahrt gesehenen von der Äquatorebene zur Reifenschulter hin wegweisenden Richtung nach axial außen verläuft. Beim Übergang über die aus Querrille 15 und Querrille 14 sowie aus Querrille 15 und zugeordneter rampenförmiger Vertiefung 16 gebildeten Querverläufen in Drehrichtung V bei Vorwärtsfahrt gesehen erfolgt jeweils ein axialer Versatz der Umfangsrille 11 nach axial innen zur Äquatorebene hin, um im anschließenden Umfangsabschnitt im Bereich der in Umfangsrichtung nachfolgenden Flanken 23 und 24 wieder unter dem Winkel δ nach außen zu laufen. Für den Winkel δ gilt beispielsweise 8° ≤ δ ≤ 12°, beispielsweise δ =10°.

Wie in den Figuren 1 und 3 am Beispiel einer Flanke 23 zu erkennen ist, sind die Flanken 22 und 23 in ihrem radial äußeren Übergangsbereich zur radialen Außenfläche der Profilblockelemente 8 bzw. 7 jeweils mit einer schrägen um die Längserstreckungsrichtung der Flanke geneigten ebenen Abkantungsfläche 27 ausgebildet, die unter einem Winkel ε von 30°≤ ε ≤ 60° - beispielsweise von ε =45° - zur radial äußeren Oberfläche des jeweiligen Profilblockelementes 8 bzw. 7 geneigt augebildet ist.

Die Abkantung 27 bildet dabei jeweils eine über die in Umfangsrichtung des Reifens gemessene Umfangserstreckung der zugeordneten Flanke 23 bzw. 24 mit spitzem Winkel zulaufende dreieckige Fläche, wobei die Öffnungsrichtung des spitzen Winkels des Dreiecksverlauf jeder Flanke 22 bzw. 23 jeweils so ausgebildet ist, dass er der axialen Richtungskomponente der schrägen unter dem Winkel δ zur Umfangsrichtung erstreckten Verlaufs des Rillengrundes bzw. der zugeordneten Profilflanke 23 bzw. 22 jeweils entgegengerichtet ausgebildet ist und die radial äußere Schnittkante 19 zwischen Abkantung 27 und radial äußerer Oberfläche des jeweils zugeordneten Profilblockelementes 8 bzw. 7 unter kleinerem Neigungswinkel θ - mit beispielsweise 2° ≤ θ ≤6°, beispielsweise θ = 4°-zu der bei Drehrichtung V bei Vorwärtsfahrt verläuft als der Winkel δ. So ist die Abkantung 27 der Flanke 23 in Drehrichtung V bei Vorwärtsfahrt gesehen über die Umfangserstreckung der Profilflanke 23 mit kontinuierlich verjüngtem zu einer Spitze hin zulaufender Breite und die entsprechende Abkantung 27 des Profilblockelements 7 jeweils mit in Drehrichtung kontinuierlich zunehmender Erweiterung ausgebildet.

Anstelle der dreieckförmigen Gestaltung der Abkantung 27 ist auch eine trapezförmige Gestaltung denkbar.

Die Profilblockelemente 5, 6, 7 und 8 der Schulterprofilblockreihe 1, der Profilblockreihe 2, der Profilblockreihe 3 sowie der Schulterprofilblockreihe 8 sind in bekannter nicht näher dargestellter Weise mit im Bereich der Reifenaufstandsfläche mit der Aufstandsbreite TW₄₅ jeweils über die Profilblockelemente erstreckten parallelen - zumindest teilweise - sinusförmigen Feineinschnitte 28 versehen ausgebildet. Darüber hinaus sind innerhalb der Profilblockelemente 5, 6, 7 und 8 in bekannter nicht näher dargestellter Weise zusätzliche zwischen Feineinschnitten 28 erstreckte Entkopplungsnuten 29 ausgebildet.

### Bezugszeichenliste

### (Teil der Beschreibung)

- 1: Schulterprofilblockreihe
- 2: Profilblockreihe
- 3: Profilblockreihe
- 4: Schulterprofilblockreihe
- 5: Profilblockelement
- 6: Profilblockelement
- 7: Profilblockelement
- 8: Profilblockelement
- 9: Umfangsrille
- 10: Umfangsrille
- 11: Umfangsrille
- 12: Querrille
- 13: Querrille
- 14: Querrille
- 15: Querrille
- 16: Rampenartige längliche Vertiefung
- 17: Profilblockschenkel
- 18: Profilblockschenkel
- 19: Schnittkante
- 20: Abschnitt
- 21: Abschnitt
- 22: Abschnitt
- 23: Flanke
- 24: Flanke
- 25: Flanke
- 26: Flanke
- 27: Abkantung
- 28: Feineinschnitt
- 29: Entkopplungsnut
- 30: Übergangsbereich
- 31: Übergangsbereich

## Patentansprüche

1. Fahrzeugreifen mit einem Laufstreifenprofil mit wenigstens zwei in Umfangsrichtung des Fahrzeugreifens erstreckten Schulterprofilblockreihen (1,4) mit in Umfangrichtung hintereinander und jeweils durch eine Querrille (12,15) voneinander getrennt angeordneten Profilblockelementen (5,8) und mit weiteren axial zwischen den Schulterprofilblockreihen (1,4) angeordneten Profilblockreihen (2,3) mit in Umfangrichtung hintereinander und jeweils durch eine Querrille (13,14) voneinander getrennt angeordneten Profilblockelementen (6,7), wobei diese weiteren Profilblockreihen (2,3) jeweils zu beiden axialen Seiten von einer Umfangsrille (9,10,11) begrenzt werden,
wobei die die Profilblockelemente (6,7) wenigstens einer der weiteren Profilblockreihen (2,3) trennenden Querrillen (13,14) in von der nächstliegenden Reifenschulter wegweisender axialer Richtung mit einem Steigungswinkel (α) zur Axialen ausgebildet sind,
wobei die Profilblockelemente (6,7) dieser Profilblockreihe (2,3) in axialer Richtung zur Reifenschulter hin jeweils mit einer länglichen Vertiefung (16) ausgebildet sind, die sich axial bis in die die Profilblockreihe (2,3) zur nächstliegenden Schulter hin begrenzende Umfangsrille (9,11) erstreckt und in diese Umfangsrille (9,11) mündet, wobei die länglichen Vertiefungen (16) in ihrer Längserstreckung in von der nächstliegenden Reifenschulter wegweisender axialer Richtung mit einem zunehmenden Steigungswinkel (β) zur Axialen ausgebildet sind,
**dadurch gekennzeichnet,**
**dass** die längliche Vertiefungen (16) eine rampenartige längliche Vertiefung (16) ist, die sich axial bis in die die Profilblockreihe (2,3) zur nächstliegenden Schulter hin begrenzende Umfangsrille (9,11) mit zunehmender Tiefe erstreckt und in diese Umfangsrille (9,11) mündet.

2. Fahrzeugreifen gemäß den Merkmalen von Anspruch 1,
wobei die die Profilblockelemente der beiden mittleren Profilblockreihen trennenden Querrillen jeweils in von der nächstliegenden Reifenschulter wegweisender axialer Richtung mit einem zunehmenden Steigungswinkel (α) zur Axialen ausgebildet sind, wobei die Profilblockelemente dieser Profilblockreihen in axialer Richtung zur Reifenschulter hin jeweils mit einer rampenartigen länglichen Vertiefung ausgebildet sind, die sich axial bis in die die Profilblockreihe zur nächstliegenden Schulter hin begrenzenden Umfangsrille mit zunehmender Tiefe erstreckt und in diese Umfangsrille mündet,
wobei die rampenartigen länglichen Vertiefungen in ihrer Längserstreckung in von der nächstliegenden Reifenschulter wegweisender axialer Richtung mit einem zunehmenden Steigungswinkel (β) zur Axialen ausgebildet sind.

3. Fahrzeugreifen gemäß den Merkmalen von Anspruch 1 oder 2,
wobei die rampenartige Vertiefung das jeweilige Profilblockelement der Profilblockreihe auf der zur Reifenschulter hinweisenden axialen Seite in zwei in Umfangsrichtung hintereinander angeordnete zur nächstliegenden Reifenschulter hin benachbarten Profilblockreihe - insbesondere Schulterprofilblockreihe - weisende Profilblockschenkel auftrennt,
wobei jeweils ein einem Schenkel zugeordnetes Profilblockelement der benachbarten Profilblockreihe -insbesondere einer Schulterprofilblockreihe - die axiale Verlängerung des Schenkels in der benachbarten Profilblockreihe bildet.

4. Fahrzeugreifen gemäß den Merkmalen von Anspruch 1,2 oder 3,
mit einem V-förmigen Profilbild.

5. Fahrzeugreifen gemäß den Merkmalen von einem oder mehreren der vorangegangenen Ansprüche,
mit einer zentraler Umfangsrille.

6. Fahrzeugreifen gemäß den Merkmalen vonAnspruch 4,
mit einem Querrillenverlauf mit von den Reifenschultern zur zentraler Umfangsrille hin zunehmender Steigung zur axialen Richtung.

7. Fahrzeugreifen gemäß den Merkmalen von einem oder mehreren der vorangegangenen Ansprüche,
wobei sich die Profilblockelemente beider mittleren Profilblockreihen jeweils axial ausgehend von der zur nächstliegenden Reifenschulter weisenden Seite zur axialen Reifenmitte hin über die Äquatorebene hinaus in Umfangsrichtung zueinander versetzt erstrecken und - insbesondere eine Zickzackform der zentralen Umfangsrille bewirken.

8. Fahrzeugreifen gemäß den Merkmalen von einem oder mehreren der vorangegangenen Ansprüche,
bei der die die Profilblockelemente der mittleren Profilblockreihen in Umfangsrichtung von einander trennenden Querrillen jeweils in den zur nächstliegenden Reifenschultern augeordneten Profilblockreihen über die geamte axiale Erstreckung des Profils im Aufstandsbereich verlängert sind und über ihre gesamte axiale Erstreckung von axial außen nach innen hin mit einem zunehmenden Steigungsverlauf (α) zur axialen ausgebildet sind, wobei jeweils eine von der einen Reifenschulter zur axialen Mitte hin erstreckte Querrille mit ihrem axial von der Schulter wegweisenden Ende in eine von der anderen Reifenschulter zur axialen Mitte hin erstreckte Querrille unter einem Winkel (γ) Querrille mündet, wobei 20°≤y≤70° .

9. Fahrzeugreifen gemäß den Merkmalen von einem oder mehreren der vorangegangenen Ansprüche,
wobei sich die rampenartige, längliche Vertiefung von der zur nächstliegenden Reifenschulter weisenden Seite des Profilblockelements nach axial innen in einem ersten axialen Erstreckungsbereich mit einem Steigungswinkel β der Längserstreckung zur Axialen mit 25°≤β ≤35°, in einem axial nach innen anschließenden zweiten axialen Erstreckungsbereich mit einem Steigungswinkel β der Längserstreckung zur Axialen mit 40°≤β ≤50° und in einem axial nach innen anschließenden dritten axialen Erstreckungsbereich mit einem Steigungswinkel β der Längserstreckung zur Axialen mit 80°≤β ≤90° erstreckt.

10. Fahrzeugreifen gemäß den Merkmalen von einem oder mehreren der vorangegangenen Ansprüche,
mit einem axialen Abstand x, der den axialen Abstand zwischen der über den Umfang des Reifens gemittelten Umfangsrillenmitte der die mittlere Profilblockreihe zur nächstliegenden Schulter hin begrenzenden Umfangsrille und dem axial nach innen gerichteten Rampe eines Profilblockelementes dieser Profilblockreihe darstellt,
mit einem axialen Abstand y, der den axialen Abstand zwischen der über den Umfang des Reifens gemittelten Umfangsrillenmitte der die mittlere Profilblockreihe zur nächstliegenden Schulter hin begrenzenden Umfangsrille und der Äquatorebene darstellt,
wobei für das Verhältnis der Abstände x zu y gilt: 0,6≤(x/y) ≤0,8.

11. Fahrzeugreifen gemäß den Merkmalen von einem oder mehreren der vorangegangenen Ansprüche,
wobei die rampenartige länglichen Vertiefung über ihre axiale Erstreckung bis in die die Profilblockreihe zur nächstliegenden Schulter hin begrenzenden Umfangsrille hin mit kontinuierlich zunehmender Tiefe ausgebildet ist, wobei sie in der die Umfangsrille begrenzenden Flanke des Profilblocks ihre größte Tiefe D und an ihrem anderen axialen Ende ihre geringste Tiefe C aufweist, wobei das Verhältnis zwischen kleinster Tiefe C und größter Tiefe D im Neuzustand des Fahrzeugreifens gilt: 0,2≤(C/D) ≤0,7.

12. Fahrzeugreifen gemäß den Merkmalen von einem oder mehreren der vorangegangenen Ansprüche,
wobei die die Profilblockreihe zur Reifenschulter hin - insbesondere zur Schulterblockreihe hin - begrenzende Umfangsrille aus einem radial inneren Bereich und einem radial äußeren Bereich ausgebildet ist.

13. Fahrzeugreifen gemäß den Merkmalen von einem oder mehreren der vorangegangenen Ansprüche,
wobei die Profilblockelement mit Feineinschnitten ausgebildet sind.

14. Fahrzeugreifen gemäß den Merkmalen von einem oder mehreren der vorangegangenen Ansprüche,
mit einer über den Umfang des Fahrzeugreifens erstreckten, in Umfangsrichtung ausgerichteteten Umfangsrille, die zwei axial benachbarte über den Umfang des Fahrzeugreifens erstreckt ausgebildete Profilblockreihen mit jeweils über den Umfang des Fahrzeugreifens verteilt und jeweils durch in die Umfangsrille einmündende Querrillen oder rampenförmige Vertiefungen voneinander getrennt ausgebildeten Profilblockabschnitte von einander trennt,
wobei jedem Profilblockabschnitt der einen Profilblockreihe ein Profilblockabschnitt der anderen Profilblockreihe zugeordnet ausgebildet ist, wobei die die Umfangsrille begrenzenden Flanken der einander zugeordneten Profilblockabschnitte - insbesondere parallel zueinander -unter Einschluss einer axialen Richtungskomponente schräg unter einem Winkel δ zur Umfangsrichtung verlaufen,
wobei sich die Flanken von radial innen aus dem Rillengrund nach radial außen bis zur radial nach außen weisenden Oberfläche des Profilblockabschnitts erstrecken, wobei im Übergang zwischen radial äußerer Oberfläche des Profilblockabschnitts und der Flanke eine um die Längserstreckungsrichtung der Flanke geneigte Fläche ausgebildet ist, die eine vom einen in Längserstreckungsrichtung der Flanke ausgebildeten Erstreckungsende zum anderen in Längserstreckungsrichtung der Flanke ausgebildeten Erstreckungsende zunehmenden Querschnitt aufweist,
wobei die Schnittkante zwischen geneigter Fläche und radial äußerer Oberfläche des Profilblockabschnitts einen kleineren Winkel θ zur Umfangsrichtung einschließt als den Winkel δ.

15. Fahrzeugreifen gemäß den Merkmalen von Anspruch 14,
wobei die Richtung der Zunahme des Querschnitts der beiden einander zugeordneten Profilblockelemente der beiden Profilblockreihen entgegengerichtet zueinander ist.

16. Fahrzeugreifen gemäß den Merkmalen von Anspruch 14 oder 15,
wobei jedem Profilblockabschnitt der einen Profilblockreihe ein Profilblockabschnitt der anderen Profilblockreihe zugeordnet ausgebildet ist, wobei die die Umfangsrille begrenzenden Flanken der einander zugeordneten Profilblockabschnitte - insbesondere parallel zueinander - ausgehend von axial außen nach axial innen unter Einschluss einer axialen Richtungskomponente mit gleicher Orientierung schräg zur Umfangsrichtung verlaufen.

17. Fahrzeugreifen gemäß den Merkmalen von Anspruch 14,15 oder 16,
wobei jedem Profilblockabschnitt der einen Profilblockreihe ein Profilblockabschnitt der anderen Profilblockreihe zugeordnet ausgebildet ist, wobei die die Umfangsrille begrenzenden Flanken all dieser jeweils einander zugeordneten Profilblockabschnitte - insbesondere parallel zueinander - ausgehend von axial außen nach axial innen unter Einschluss einer axialen Richtungskomponente mit gleicher Orientierung schräg zur Umfangsrichtung verlaufen.

18. Fahrzeugreifen gemäß den Merkmalen von einem oder mehreren der Ansprüche 14 bis 17,
wobei die im Übergang zwischen radial äußerer Oberfläche des Profilblockabschnitts und der Flanke zur Längserstreckungsrichtung der Flanke geneigte Fläche eine trapezförmige Fläche ist.

19. Fahrzeugreifen gemäß den Merkmalen von einem oder mehreren der Ansprüche 14 bis 17,
wobei die im Übergang zwischen radial äußerer Oberfläche des Profilblockabschnitts und der Flanke zur Längserstreckungsrichtung der Flanke geneigte Fläche eine dreieckige Fläche ist.

20. Fahrzeugreifen gemäß den Merkmalen von Anspruch 1,
bei dem das Laufstreifenprofil drehrichtungsgebunden ausgebildet ist.

21. Fahrzeugreifen gemäß den Merkmalen von Anspruch 1,
wobei die die Profilblockelemente (6,7) wenigstens einer der weiteren Profilblockreihen (2,3) trennenden Querrillen (13,14) in von der nächstliegenden Reifenschulter wegweisender axialer Richtung mit einem zunehmenden Steigungswinkel (α) zur Axialen ausgebildet sind.

## Claims

1. Vehicle tyre having a tread profile with at least two shoulder profile block rows (1, 4) extended in the circumferential direction of the vehicle tyre and comprising profile block elements (5, 8) arranged one behind the other in the circumferential direction and separated from each other by a transverse groove (12, 15) and with further profile block rows (2, 3) arranged axially between the shoulder profile block rows (1, 4) and comprising profile block elements (6, 7) arranged one behind the other in the circumferential direction and in such a way as to be separated from each other by a transverse groove (13, 14), said further profile block rows (2, 3) each being delimited on both axial sides by a circumferential groove (9, 10, 11),
wherein the transverse grooves (13, 14) separating the profile block elements (6, 7) of at least one of the further profile block rows (2, 3) are formed with a slope angle (α) relative to the axial in an axial direction away from the nearest tyre shoulder,
wherein the profile block elements (6, 7) of said profile block row (2, 3) are each formed with an elongate recess (16) towards the tyre shoulder in an axial direction, said recess extending axially into the circumferential groove (9, 11) delimiting the profile block row (2, 3) with respect to the nearest shoulder and opening into said circumferential groove (9, 11), wherein, along the length of the elongate recesses (16), said recesses are formed with an increasing slope angle (β) relative to the axial in an axial direction away from the nearest tyre shoulder, **characterized in that**
the elongate recess (16) is a ramp-type elongate recess (16) which extends axially with increasing depth into the circumferential groove (9, 11) delimiting the profile block row (2, 3) with respect to the nearest shoulder and opens into said circumferential groove (9, 11).

2. Vehicle tyre according to the features of Claim 1, wherein the transverse grooves separating the profile block elements of the two central profile block rows are each formed with an increasing slope angle (α) relative to the axial in an axial direction away from the nearest tyre shoulder, wherein the profile block elements of said profile block rows are each formed, in an axial direction relative to the tyre shoulder, with a ramp-type elongate recess which extends axially with increasing depth into the circumferential groove delimiting the profile block row with respect to the nearest shoulder and opens into said circumferential groove,
wherein, along the length of the ramp-type elongate recesses, said recesses are formed with an increasing slope angle (β) relative to the axial in an axial direction away from the nearest tyre shoulder.

3. Vehicle tyre according to the features of Claim 1 or 2, wherein the ramp-type recess divides the respective profile block element of the profile block row on the axial side facing the tyre shoulder into two profile block arms arranged one behind the other in the circumferential direction and pointing towards the profile block row - in particular shoulder profile block row - adjacent to the nearest tyre shoulder,
wherein each profile block element of the adjacent profile block row - in particular shoulder profile block row - which is associated with an arm forms the axial extension of the arm in the adjacent profile block row.

4. Vehicle tyre according to the features of Claim 1, 2 or 3,
having a V-shaped profile pattern.

5. Vehicle tyre according to the features of one or more of the preceding claims,
having a central circumferential groove.

6. Vehicle tyre according to the features of Claim 4, having a transverse groove path with a slope which increases relative to the axial direction from the tyre shoulders towards the central circumferential groove.

7. Vehicle tyre according to the features of one or more of the preceding claims,
wherein, starting from the side facing the nearest tyre shoulder, the profile block elements of both central profile block rows each extend axially towards the axial centre of the tyre and beyond the equatorial plane, with an offset relative to one another in the circumferential direction, and, in particular, give the central circumferential groove a zigzag shape.

8. Vehicle tyre according to the features of one or more of the preceding claims,
in which the transverse grooves separating the profile block elements of the central profile block rows from each other in the circumferential direction are each extended over the entire axial extent of the profile in the contact area in the profile block rows arranged towards the nearest tyre shoulders and are formed over their entire axial extent with an increasing slope (α) relative to the axial from axially outside inwards, wherein a transverse groove extended from one tyre shoulder towards the axial centre in each case opens with its end axially remote from the shoulder into a transverse groove extended from the other tyre shoulder towards the axial centre, opening into said groove at an angle (γ), where 20°≤γ≤70°.

9. Vehicle tyre according to the features of one or more of the preceding claims,
wherein the ramp-type elongate recess extends axially inwards from the side of the profile block element facing the nearest tyre shoulder at a slope angle β of the longitudinal extent relative to the axial of 25°≤β≤35° in a first axial extension area, at a slope angle β of the longitudinal extent relative to the axial of 40°≤β≤50° in a second axial extension area adjoining axially on the inside, and at a slope angle β of the longitudinal extent relative to the axial of 80°≤β≤90° in a third axial extension area adjoining axially on the inside.

10. Vehicle tyre according to the features of one or more of the preceding claims,
with an axial distance x which represents the axial distance between the circumferential groove centre, averaged over the circumference of the tyre, of the circumferential groove delimiting the central profile block row with respect to the nearest shoulder and the axially inward-oriented ramp of a profile block element of said profile block row,
with an axial distance y which represents the axial distance between the circumferential groove centre, averaged over the circumference of the tyre, of the circumferential groove delimiting the central profile block row with respect to the nearest shoulder and the equatorial plane,
wherein the ratio of the distances x to y is given by: 0.6≤(x/y)≤0.8.

11. Vehicle tyre according to the features of one or more of the preceding claims,
wherein the ramp-type elongate recess is formed with a continuously increasing depth over its axial extent as far as the circumferential groove delimiting the profile block row with respect to the nearest shoulder, wherein said recess has its maximum depth D in the profile block flank delimiting the circumferential groove and its minimum depth C at its other axial end, wherein the ratio between the minimum depth C and the maximum depth D when the vehicle tyre is new is given by: 0.2≤(C/D)≤0.7.

12. Vehicle tyre according to the features of one or more of the preceding claims,
wherein the circumferential groove delimiting the profile block row with respect to the tyre shoulder - in particular with respect to the shoulder block row - is formed by a radially inner area and a radially outer area.

13. Vehicle tyre according to the features of one or more of the preceding claims,
wherein the profile block element is formed with sipes.

14. Vehicle tyre according to the features of one or more of the preceding claims,
with a circumferential groove, which is extended over the circumference of the vehicle tyre, is oriented in the circumferential direction and separates two axially adjacent profile block rows formed so as to be extended over the circumference of the vehicle tyre, each with profile block sections which are formed in such a way as to be distributed over the circumference of the vehicle tyre and in such a way as to be separated from one another by transverse grooves opening into the circumferential groove or by ramp-shaped recesses, wherein each profile block section of one profile block row is formed in such a way as to have associated therewith one profile block section of the other profile block row, wherein those flanks of the mutually associated profile block sections which delimit the circumferential groove extend obliquely at an angle δ to the circumferential direction - in particular parallel to one another - while including an axial direction component,
wherein the flanks extend from the groove base from the radial inside towards the radial outside as far as the radially outward-facing surface of the profile block section,
wherein, at the transition between the radially outer surface of the profile block section and the flank, a surface sloping in the direction of longitudinal extension of the flank is formed, having a cross section which increases from one end of extension formed in the longitudinal direction of extension of the flank to the other end of extension formed in the longitudinal direction of extension of the flank,
wherein the intersecting edge between the sloping surface and the radially outer surface of the profile block section includes a smaller angle θ relative to the circumferential direction than the angle δ.

15. Vehicle tyre according to the features of Claim 14,
wherein the direction of increase in the cross section of the two mutually associated profile block elements of the two profile block rows is opposed.

16. Vehicle tyre according to the features of Claim 14 or 15,
wherein each profile block section of one profile block row is formed in such a way as to have associated therewith one profile block section of the other profile block row, wherein those flanks of the mutually associated profile block sections which delimit the circumferential groove extend axially inwards with the same orientation, obliquely to the circumferential direction - in particular parallel to one another - starting from a location axially on the outside, while including an axial direction component.

17. Vehicle tyre according to the features of Claim 14, 15 or 16,
wherein each profile block section of one profile block row is formed in such a way as to have associated therewith one profile block section of the other profile block row, wherein those flanks of all these mutually associated profile block sections which delimit the circumferential groove extend axially inwards with the same orientation, obliquely to the circumferential direction - in particular parallel to one another - starting from a location axially on the outside, while including an axial direction component.

18. Vehicle tyre according to the features of one or more of Claims 14 to 17,
wherein the surface at the transition between the radially outer surface of the profile block section and the flank, said surface sloping relative to the direction of longitudinal extension, is a trapezoidal surface.

19. Vehicle tyre according to the features of one or more of Claims 14 to 17,
wherein the surface at the transition between the radially outer surface of the profile block section and the flank, said surface sloping relative to the direction of longitudinal extension, is a triangular surface.

20. Vehicle tyre according to the features of Claim 1, in which the tread profile is formed in a directional manner in terms of the direction of rotation.

21. Vehicle tyre according to the features of Claim 1, wherein, in an axial direction away from the nearest tyre shoulder, the transverse grooves (13, 14) separating the profile block elements (6, 7) of at least one of the further profile block rows (2, 3) are formed with an increasing slope angle (α) relative to the axial.

## Revendications

1. Bandage pour roue de véhicule, qui présente un profil de bande de roulement doté d'au moins deux rangées (1, 4) de blocs profilés d'épaulement qui s'étendent dans la direction périphérique du bandage de roue de véhicule, lesquelles rangées présentent des éléments (5, 8) de bloc profilé disposés les uns derrière les autres et séparés les uns des autres par une rainure transversale (12, 15) et d'autres rangées (2, 3) de blocs profilés qui sont disposées entre les rangées (1, 4) de blocs profilés d'épaulement et qui présentent des éléments (6, 7) de bloc profilé disposés les uns derrière les autres dans la direction périphérique et séparés les uns des autres par une rainure transversale (13, 14), ces autres rangées (2, 3) de blocs profilés étant délimitées par une rainure périphérique (9, 10, 11) sur les deux côtés axiaux,
les rainures transversales (13, 14) qui séparent les éléments (6, 7) de bloc profilé d'au moins l'une des autres rangées (2, 3) de blocs profilés présentant un angle d'inclinaison (α) par rapport à la direction axiale en s'éloignant de l'épaulement de bandage de roue le plus proche,
les éléments (6, 7) de bloc profilé de ces rangées (2, 3) de blocs profilés présentant dans la direction axiale un creux allongé (16) orienté vers l'épaulement du bandage de roue, ce creux allongé s'étendant axialement jusque dans la rainure périphérique (9, 11) qui délimite la rangée (2, 3) de blocs profilés en direction de l'épaulement le plus proche et débouchant dans cette rainure périphérique (9, 11),
l'extension longitudinale des creux allongés (16) présentant un angle d'inclinaison (β) qui augmente dans la direction axiale en s'éloignant de l'épaulement le plus proche du bandage de roue,
**caractérisé en ce que**
les creux allongés (16) sont des creux allongés (16) en forme de rampe qui s'étendent avec une profondeur croissante jusque dans la rainure périphérique (9, 11) qui délimite la rangée (2, 3) de blocs profilés en direction de l'épaulement le plus proche et débouche dans cette rainure périphérique (9, 11).

2. Bandage pour roue de véhicule présentant les caractéristiques de la revendication 1,
dans lequel les rainures transversales qui séparent les éléments de bloc profilé des deux rangées centrales de blocs profilés présentent chacune un angle d'inclinaison (α) par rapport à l'axe dans la direction axiale en s'éloignant de l'épaulement le plus proche du bandage de roue, les éléments de bloc profilé de ces rangées de blocs profilés présentant un creux allongé en forme de pente dans la direction axiale conduisant à l'épaulement du bandage de roue, ce creux allongé s'étendant axialement avec une profondeur croissante jusque dans la rainure périphérique qui délimite la rangée de blocs profilés en direction de l'épaulement le plus proche et débouchant dans cette rainure périphérique,
les creux allongés en forme de rampe présentant dans leur extension longitudinale un angle d'inclinaison (β) croissant par rapport à la direction axiale en s'éloignant dans la direction axiale de l'épaulement le plus proche du bandage de roue.

3. Bandage pour roue de véhicule présentant les caractéristiques des revendications 1 ou 2, dans lequel, sur le côté axial tourné vers l'épaulement du bandage de roue, le creux en forme de rampe sépare chaque élément de bloc profilé de la rangée de blocs profilés en deux ailes de bloc profilé disposées l'une derrière l'autre dans la direction périphérique et orientées vers la rangée de blocs profilés et en particulier la rangée de blocs profilés d'épaulement voisine de l'épaulement le plus proche du bandage de roue,
un élément de bloc profilé, associé à une aile, de la rangée voisine de blocs profilés et en particulier d'une rangée de blocs profilés d'épaulement formant le prolongement axial de l'aile dans la rangée voisine de blocs profilés.

4. Bandage pour roue de véhicule présentant les caractéristiques des revendications 1, 2 ou 3, dont le profil est configuré en forme de V.

5. Bandage pour roue de véhicule présentant les caractéristiques d'une ou plusieurs des revendications précédentes, présentant une rainure périphérique centrale.

6. Bandage pour roue de véhicule présentant les caractéristiques de la revendication 4, dont les rainures transversales s'étendent sous une inclinaison croissante par rapport à la direction axiale depuis les épaulements de bandage de roue jusqu'à la rainure périphérique centrale.

7. Bandage pour roue de véhicule présentant les caractéristiques d'une ou plusieurs des revendications précédentes, dans lequel les éléments de bloc profilé des deux rangées centrales de blocs profilés s'étendent tous deux axialement dans le plan équatorial, partant du côté tourné vers l'épaulement le plus proche du bandage de roue et en direction du centre du bandage de roue, en décalage mutuel dans la direction périphérique en entraînant en particulier que la rainure périphérique centrale a une forme de zigzag.

8. Bandage pour roue de véhicule présentant les caractéristiques d'une ou plusieurs des revendications précédentes, dans lequel les rainures transversales qui séparent l'une de l'autre dans la direction périphérique les éléments de bloc profilé des rangées centrales de blocs profilés sont toutes prolongées dans les rangées de blocs profilés disposées du côté des épaulements les plus proches du bandage de roue et sur toute l'extension axiale du profilé dans la zone d'appui au sol et sont configurées sur toute leur extension axiale avec une inclinaison (α) croissante par rapport à la direction axiale dans la direction qui va axialement de l'extérieur à axialement vers l'intérieur, une rainure transversale qui s'étend entre un épaulement du bandage de roue et le centre axial débouchant dans une rainure transversale qui s'étend entre l'autre épaulement du bandage de roue et le milieu axial sous un angle (γ), 20°≤ γ ≤ 70°.

9. Bandage pour roue de véhicule présentant les caractéristiques d'une ou plusieurs des revendications précédentes, dans lequel le creux allongé en forme de rampe s'étend dans une première partie de son extension axiale vers l'intérieur depuis le côté de l'élément de bloc profilé tourné vers l'épaulement le plus proche du bandage de roue sous un angle d'inclinaison β de son extension axiale par rapport à la direction axiale, 25° ≤ β ≤ 35°, dans une deuxième partie de son extension axiale qui s'y raccorde sous un angle d'inclinaison β de son extension longitudinale par rapport à la direction axiale, 40° ≤ β ≤ 50° et dans une troisième partie de son extension axiale qui s'y raccorde axialement vers l'intérieur sous un angle d'inclinaison β de son extension axiale par rapport à la direction axiale, 80° ≤ β ≤ 90°.

10. Bandage pour roue de véhicule présentant les caractéristiques d'une ou plusieurs des revendications précédentes, dans lequel à une distance axiale x qui représente la distance axiale entre le milieu de la rainure périphérique, pris en moyenne sur la périphérique du bandage de roue, qui délimite la rangée centrale de blocs profilés en direction de l'épaulement le plus proche et la rampe, orientée axialement vers l'intérieur, d'un élément de bloc profilé de cette rangée de blocs profilés, et une distance axiale y, qui représente la distance axiale entre le milieu, en moyenne sur la périphérie du bandage de roue, de la rainure périphérique qui délimite la rangée centrale de blocs profilés en direction de l'épaulement le plus proche et le plan équatorial,
le rapport entre les distances x et y vérifiant la relation 0,6 ≤ (x/y) ≤ 0,8.

11. Bandage pour roue de véhicule présentant les caractéristiques d'une ou plusieurs des revendications précédentes, dans lequel le creux allongé en forme de rampe présente une extension axiale dont la profondeur croît de manière continue jusque dans la rainure périphérique qui délimite la rangée de blocs profilés en direction de l'épaulement le plus proche, et présente sur le flanc du bloc profilé qui délimite la rainure périphérique sa plus grande profondeur D et à son autre extrémité axiale sa plus petite profondeur C, le rapport entre la plus petite profondeur C et la plus grande profondeur D vérifiant la relation 0,2 ≤ (C/D) ≤ 0,7 lorsque le bandage de roue du véhicule est à l'état neuf.

12. Bandage pour roue de véhicule présentant les caractéristiques d'une ou plusieurs des revendications précédentes, dans lequel la rainure périphérique qui délimite la rangée de blocs profilés en direction de l'épaulement du bandage de roue et en particulier en direction de la rangée de blocs d'épaulement est formée d'une partie radialement intérieure et d'une partie radialement extérieure.

13. Bandage pour roue de véhicule présentant les caractéristiques d'une ou plusieurs des revendications précédentes, dans lequel l'élément de bloc profilé est configuré avec de fines entailles.

14. Bandage pour roue de véhicule présentant les caractéristiques d'une ou plusieurs des revendications précédentes, présentant une rainure périphérique qui s'étend à la périphérie du bandage de roue de véhicule, orientée dans la direction périphérique, qui sépare l'une de l'autre deux rangées de blocs profilés axialement voisines, s'étendant sur la périphérie du bandage de roue du véhicule et présentant des parties de bloc profilé séparées les unes des autres par des rainures transversales qui débouchent dans la rainure périphérique ou des creux en forme de rampe,
une partie de bloc profilé de chaque rangée de blocs profilés étant associée à une autre partie de bloc profilé d'une rangée de blocs profilés, les flancs, délimitant la rainure périphérique, des parties de bloc profilé associées l'une à l'autre et en particulier parallèles l'une à l'autre s'étendant obliquement par rapport à la direction périphérique sous un angle δ en incluant une composante de direction axiale,
les flancs s'étendant du fond de rainure depuis une position radialement intérieure hors jusqu'à la surface orientée radialement vers l'extérieur, de la partie de bloc profilé, en une position radialement extérieure,
une surface inclinée par rapport à la direction de l'extension longitudinale des flancs et qui présente une section transversale croissante entre une extrémité de son extension dans la direction d'extension longitudinale du flanc et l'autre extrémité d'extension dans la direction d'extension longitudinale du flanc à la transition entre la surface radialement extérieure de la partie de bloc profilé et le flanc,
le bord de coupe entre la surface inclinée et la surface radialement extérieure de la partie de bloc profilé formant par rapport à la direction périphérique un angle θ plus petit que l'angle δ.

15. Bandage pour roue de véhicule présentant les caractéristiques de la revendication 14, dans lequel les deux éléments de bloc profilé, associés l'un à l'autre, des deux rangées de blocs profilés, présentent des augmentations de section transversale de directions opposées l'une à l'autre.

16. Bandage pour roue de véhicule présentant les caractéristiques des revendications 14 ou 15, dans lequel une partie de bloc profilé d'une rangée de blocs profilés est associée à chaque partie de bloc profilé de l'autre rangée de blocs profilés, les flancs, délimitant la rainure périphérique, des parties de bloc profilé associées l'une à l'autre et en particulier parallèles l'une à l'autre, s'étendant obliquement sous une même orientation par rapport à la direction périphérique depuis une position axialement extérieure jusqu'à une position axialement intérieure en formant une composante axiale de direction.

17. Bandage pour roue de véhicule présentant les caractéristiques des revendications 14, 15 ou 16, dans lequel une partie de bloc profilé d'une rangée de blocs profilés est associée à chaque partie de bloc profilé de l'autre rangée de blocs profilés, les flancs, délimitant la rainure périphérique, de toutes ces parties de bloc profilé associées l'une à l'autre et en particulier parallèles l'une à l'autre s'étendant obliquement sous une même orientation par rapport à la direction périphérique depuis une position axialement extérieure jusqu'à une position axialement intérieure en incluant une composante axiale de direction.

18. Bandage pour roue de véhicule présentant les caractéristiques d'une ou plusieurs des revendications 14 à 17, dans lequel la surface inclinée par rapport à la direction d'extension longitudinale des flancs à la transition entre la surface radialement extérieure de la partie de bloc profilé et le flanc est une surface trapézoïdale.

19. Bandage pour roue de véhicule présentant les caractéristiques d'une ou plusieurs des revendications 14 à 17, dans lequel la surface inclinée par rapport à la direction d'extension longitudinale du flanc à la transition entre la surface radialement extérieure de la partie de bloc profilé et le flanc est une surface triangulaire.

20. Bandage pour roue de véhicule présentant les caractéristiques de la revendication 1, dans lequel le profil de bande de roulement est lié au sens de rotation.

21. Bandage pour roue de véhicule présentant les caractéristiques de la revendication 1 dans lequel les rainures transversales (13, 14) qui séparent les éléments (6, 7) de blocs profilés d'au moins l'une des autres rangées (2, 3) de blocs profilés présentent dans la direction axiale non tournée vers l'épaulement le plus proche du bandage de roue un angle d'inclinaison (α) croissant par rapport à la direction axiale.
